# EUROPÄISCHE PATENTSCHRIFT

(11) **EP 3 132 962 B1**
(45) Veröffentlichungstag und Bekanntmachung des Hinweises auf die Patenterteilung: **25.10.2017**
(21) Anmeldenummer: 15181482.9
(22) Anmeldetag: 18.08.2015
(51) Int. Cl.: B60K 15/04, E05B 83/30, E05B 83/34, B60K 15/05

(54) **TANKDECKEL MIT ENTRIEGELUNGSVORRICHTUNG BASIEREND AUF FORMGEDÄCHTNISMATERIAL**
TANK CAP WITH UNLOCKING DEVICE BASED ON SHAPE MEMORY MATERIAL
COUVERCLE DE RESERVOIR DOTE D'UN DISPOSITIF DE DEVERROUILLAGE A BASE DE MATERIAU A MEMOIRE DE FORME

(43) Veröffentlichungstag der Anmeldung: 22.02.2017
(73) Patentinhaber: SMR Patents S.à.r.l., 1653 Luxembourg (LU)
(72) Erfinder: Herrmann, Andreas, 71364 Winnenden-Baach (DE)
(74) Vertreter: Weber-Bruls, Dorothée

(56) Entgegenhaltungen:
- WO-A1-2011/120719
- DE-A1-102011 001 390
- DE-A1-102011 114 383
- DE-A1-102012 015 227
- US-A- 2 505 637
- US-A1- 2013 305 705
- US-B1- 6 318 771

## Beschreibung

### GEBIET DER ERFINDUNG

Die Erfindung betrifft eine verriegelbare bzw. entriegelbare Klappe bzw. Deckel, insbesondere für ein Kraftfahrzeug, beispielsweise einen Tankdeckel oder einen Handschuhfachdeckel. Genauer gesagt betrifft die Erfindung eine Klappe nach dem Oberbegriff von Anspruch 1.

### HINTERGRUND DER ERFINDUNG

Bei bekannten Entriegelungsvorrichtungen für einen Tankdeckel werden Stellmotoren mit entsprechenden Getrieben eingesetzt. Diese sind teuer, wartungsanfällig und benötigen relativ viel Platz. Aufgrund des Platzbedarfs werden bekannte Entriegelungsvorrichtungen mit Stellmotoren ausschließlich an einer zum Fahrzeug unbeweglichen Stelle und nicht am beweglichen Tankdeckel selbst angeordnet. Am Tankdeckel selbst befindet sich nur ein Halteelement, das in die Entriegelungsvorrichtung eingreifen kann und im Falle einer verriegelten Position von der Entriegelungsvorrichtung gesichert wird, so dass der Tankdeckel nicht geöffnet werden kann.

Eine gattungsgemäße Klappe in Form eines Tankdeckels ist aus der US 2,505,637 oder der DE 10 2011 114 383 A1 bekannt.

Aufgabe der Erfindung ist es eine verbesserte Klappe mit einer Entriegelungsvorrichtung, insbesondere für an Kraftfahrzeugen verwendete Klappen, bereitzustellen, die kostengünstig in der Herstellung ist, wartungsarm arbeitet und Platzsparend verbaut werden kann.

### ZUSAMMENFASSUNG DER ERFINDUNG

Die Aufgabe wird durch eine Klappe nach Anspruch 1 gelöst.

Die erfindungsgemäße Klappe mit einer daran angeordneten Entriegelungsvorrichtung hat eine Gelenkvorrichtung, um die Klappe relativ zu einem Träger, insbesondere ein Kraftfahrzeug, zwischen einer geschlossenen und einer offenen Position bewegen zu können, wobei in einer geschlossenen Position eine Öffnung zumindest teilweise abgedeckt wird. Eine Gelenkvorrichtung kann jede bekannte Vorrichtung sein, die ein festes Teil, wie ein Kraftfahrzeug, mit einem losen Teil, wie einer Klappe, verbindet, beispielsweise ein Gelenk oder ein Scharnier. Neben Gelenkvorrichtungen, bei denen das lose Teil relativ zum festen Teil um eine bestimmte Achse dreht, können auch andere Verbindungen als Gelenkvorrichtung im Sinne der Erfindung verwendet werden, beispielsweise ein flexibles Verbindungsstück, das an beiden Teilen befestigt ist, wobei die Teile zueinander um mehrere Achsen zueinander bewegt werden können.

Weiter hat die erfindungsgemäße Klappe eine Verriegelungsvorrichtung bzw. Entriegelungsvorrichtung mit einem Aktuator, der zumindest teilweise ein Formgedächtnismaterial aufweist. Die Formveränderung des Formgedächtnismaterials und/oder die entsprechende Rückstellung in den vorherigen Zustand führt zur Aktuatorbewegung. Die Entriegelungsvorrichtung weist ein bewegbares Sicherungsteil auf, das mittels des Aktuators zwischen mindestens einer verriegelten Position und mindestens einer entriegelten Position bewegt werden kann. In der entriegelten Position kann die Klappe zwischen der geöffneten und der geschlossen Position bewegt werden wohingegen in der verriegelten Position das Sicherungsteil mit einem Halteelement, das ortsfest zum Träger angeordnet ist, so in Eingriff gebracht ist, dass die Klappe nicht von der geschlossenen Position in die geöffnete Position bewegt werden kann. Mit anderen Worten hält das Sicherungsteil in einer verriegelten Position das Halteelement fest und verhindert somit die Öffnung der Klappe.

Durch den Einsatz eines Formgedächtnisaktuators kann der Platzbedarf der Entriegelungsvorrichtung so optimiert werden, dass diese direkt an einer Klappe angeordnet werden kann. Dies ist vorteilhaft, da auf diese Weise weniger Teile und auch weniger bewegliche Teile am Träger, beispielsweise einem Kraftfahrzeug, angeordnet werden müssen. Dies führt zu einer größeren Gestaltungsfreiheit und weiter zu einer einfacheren Wartung, da im Falle eines Defekts der Entriegelungsvorrichtung einfach die Klappe getauscht werden kann. Es wird angemerkt, dass sich die Bezeichnungen Verriegelungsvorrichtung und Entriegelungsvorrichtung im Sinne dieser Erfindung auf die gleiche Sache beziehen, nämlich die Vorrichtung, mit der die Klappe verriegelt bzw. entriegelt werden kann.

Der Aktuator kann durch seine Formveränderung eine Linearbewegung, insbesondere in Richtung seiner Längsachse, ausführen, die das Sicherungsteil mittels einer direkten Verbindung oder über ein Getriebe antreibt. Das Getriebe kann die Linearbewegung des Aktuators in eine entsprechende Bewegung des Sicherungsteils umwandeln, beispielsweise eine andere lineare Bewegung, in eine kurvige Bewegung oder in eine Rotationsbewegung.

Das Sicherungsteil ist erfindungsgemäß so ausgestaltet, dass es in einer wechselnden Richtung zwischen einer verriegelten Position und einer entriegelten Position bewegt wird. Mit anderen Worten kann das Sicherungsteil abwechselnd in verschiedene Richtungen bewegt werden. Das Sicherungsteil ist zu diesem Zwecke so ausgestaltet, dass es durch eine Aktuatorauslösung in eine erste Richtung und damit in eine verriegelte oder entriegelte Position bewegt wird und durch ein Sicherungsteilrückstellelement zurück zur anderen Position bewegt wird. Das Sicherungsteil weist ferner einen Rastmechanismus auf, so dass das Sicherungsteil nach der Bewegung in die erste Richtung in einer Position einrastet und erst nach einer Freigabe des Rastmechanismus in die andere Position bewegt werden kann. Der Rastmechanismus kann direkt am Sicherungsteil angeordnet sein, beispielsweise in Form einer Ausnehmung, in die ein entsprechend geformtes erhabenes Teil einrastet. Alternativ kann der Rastmechanismus indirekt mit dem Sicherungsteil verbunden sein, beispielsweise über Getriebemittel.

Die Freigabe des Rastmechanismus kann durch verschiedene Maßnahmen erfolgen, beispielsweise durch eine zweite Aktuatorauslösung, die zu einer stärkeren Formveränderung als die Formveränderung durch die erste Aktuatorauslösung führt, oder eine Rückstellung des Aktuators, oder durch einen zweiten Aktuator.

Das Sicherungsteil kann als eine Lochscheibe oder ein Abschnitt einer Lochscheibe ausgestaltet sein. Die Lochscheibe kann so ausgestaltet sein, dass das Halteelement in einer entriegelten Position zumindest teilweise in eine Öffnung der Lochscheibe bewegt werden kann und aus dieser heraus bewegt werden kann. In einer verriegelten Position wird das Halteelement mit der Lochscheibe so in Eingriff gebracht, dass das Halteelement nicht aus der Lochscheibe heraus bewegt werden kann. Vorzugsweise kann das Halteelement in einer verriegelten Position in die Lochscheibe hinein bewegt werden. Dadurch kann die Klappe auch im verriegelten Zustand geschlossen, jedoch nicht mehr geöffnet werden.

Das Halteelement kann die Form eines Pilzzapfens haben, der mit der Lochscheibe in Eingriff gebracht werden kann. Das Halteelement kann in einer Profilbahn auf der Lochscheibe geführt werden.

Das Sicherungsteil kann als ein Flügelrad oder ein Abschnitt eines Flügelrads ausgestaltet sein. Von einem beispielsweise kreisrunden Zentrum erstrecken sich Flügel radial nach außen, ähnlich wie Rotorblätter. Die Breite der Flügel und der Abstand der Flügel zueinander kann in Übereinstimmung mit der Ausgestaltung des Halteelements so gewählt werden, dass in einer entriegelten Position das Halteelement ohne Widerstand vom Sicherungsteil entfernt werden kann. Dazu kann ein Flügel etwas schmäler als der entsprechende Abstand der Flügel zueinander gewählt werden. Das Halteelement kann ein U- oder Hakenförmiges Element sein, in das ein Flügel des Flügelrads eingreifen kann.

Die Erfindung betrifft weiter einen Tankdeckel und Handschuhfachdeckel.

### KURZE BESCHREIBUNG DER ZEICHNUNGEN

Die folgenden schematischen Zeichnungen stellen beispielhafte Ausführungsformen dar, um das Verständnis der Erfindung zu verbessern, wobei
- Figur 1: eine schematische Ansicht einer Entriegelungsvorrichtung;
- Figur 2: eine schematische Ansicht eines Getriebes einer Entriegelungsvorrichtung nach Figur 1;
- Figur 3: eine schematische Ansicht einer erfindungsgemäßen Entriegelungsvorrichtung;
- Figuren 4a, 4b: eine schematische Ansicht der erfindungsgemäßen Entriegelungsvorrichtung in einer eingerasteten bzw. nicht eingerasteten Position;
- Figur 5: eine schematische Ansicht eines Sicherungsteils, das als Lochscheibe ausgestaltet ist;
- Figuren 6a, 6b: eine schematische Querschnittsansicht der Lochscheibe aus Figur 5 mit einem Halteelement;
- Figur 7: eine schematische Ansicht eines Sicherungsteils, das als Flügelrad ausgestaltet ist;
- Figuren 8a, 8b: eine schematische Querschnittsansicht des Flügelrads aus Figur 7 mit einem Halteelement zeigt.

### DETAILLIERTE BESCHREIBUNG DER ERFINDUNG

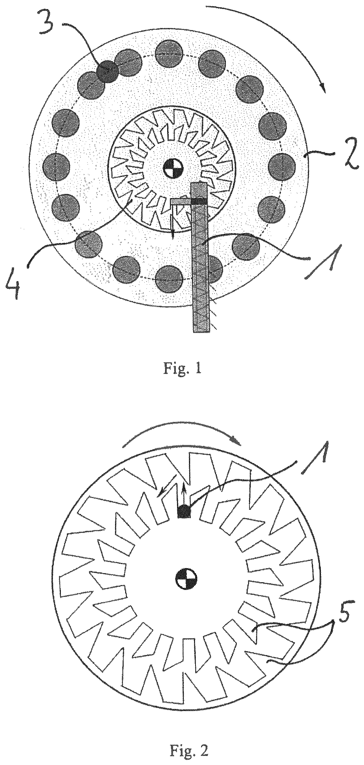

Figur 1 zeigt eine schematische Ansicht einer Entriegelungsvorrichtung. Die Entriegelungsvorrichtung ist an einer Klappe angeordnet, die relativ zu einem Träger bewegt werden kann. Beispielsweise kann die Klappe ein Tankdeckel eines Kraftfahrzeugs sein. Die Entriegelungsvorrichtung wird mittels eines Aktuators 1 betätigt. Der Aktuator 1 ist ein Formgedächtniselement und kann bei Auslösung insbesondere seine Länge entlang seiner Längsachse verändern. Der Aktuator 1 bewegt ein Sicherungsteil 2, das in diesem Beispiel eine Lochscheibe ist, im Uhrzeigersinn. Die Lochscheibe kann über ihre Rotationsachse an der Klappe angeordnet sein. Der Aktuator 1 bewegt das Sicherungsteil 2 über ein Getriebe 4, wobei durch jede Aktuatorauslösung das Sicherungsteil 2 um eine Position im Uhrzeigersinn gedreht wird. Durch jede Drehung wird das Sicherungsteil 2 so gedreht, dass es zwischen einer verriegelten Position und einer entriegelte Position wechselt.

Wie in Verbindung mit Figur 2 dargestellt, bewegt sich der Aktuator 1, der in diesem Beispiel eine Linearbewegung ausführt, entlang der Konturen der Rasten 5 im Inneren des Sicherungsteils 2. Dadurch wird das Sicherungsteil 2 um eine Position im Uhrzeigersinn weitergedreht, beispielsweise in eine verriegelte Position. Die Verriegelung erfolgt durch die Profilbahn des Sicherungsteils 2. In einer verriegelten Position wird das Halteelement 3 blockiert, wohingegen es in einer entriegelten Position freigegeben wird. Der Aktuator 1 kann beispielsweise durch ein Rückstellelement wie einer Feder oder andere bekannte Maßnahmen wieder in die ursprüngliche Position gebracht werden.

Die Bewegung des Sicherungsteils 2 kann auch im Gegenuhrzeigersinn erfolgen.

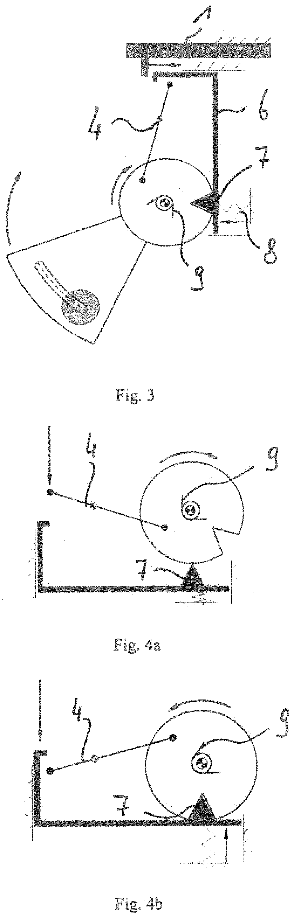

Figur 3 ist eine schematische Ansicht einer erfindungsgemäßen Entriegelungsvorrichtung. Das Sicherungselement 2 ist hier als ein Abschnitt einer Lochscheibe ausgestaltet, wobei dieser Lochscheibenabschnitt in wechselende Richtungen bewegt wird. Bei einer Auslösung des Aktuators 1 wird der Lochscheibenabschnitt und/oder ein Rastelement, beispielsweise ein Riegel 6 mit einem Einrastzacken 7, bewegt.

Wie genauer in Figur 4a dargestellt, wird bei einer Betätigung des Aktuators 1 in Richtung des dargestellten linearen Pfeils über ein Getriebe 4 das Sicherungsteil 2 im Uhrzeigersinn bewegt, bis der Einrastzacken 7 des Riegels 6 in die entsprechende Ausnehmung des Sicherungsteils 2 eingreift. Die Entriegelungsvorrichtung in den Figuren 4a und 4b der Übersichtlichkeit halber ohne den Aktuator 1 und den Lochscheibenabschnitt dargestellt. Die eingerastete Position des Sicherungsteils 2 kann einer entriegelten oder verriegelten Position entsprechen. Der Riegel 6 kann mittels eines Riegelrückstellelements 8, beispielsweise eine Druckfeder, so vorgespannt sein, dass bei einer entsprechenden Drehstellung des Sicherungsteils 2 der Einrastzacken 7 des Riegels 6 in die Ausnehmung gedrückt wird. Durch eine weitere Bewegung des Aktuators 1 wird der Riegel 6 entgegen der Kraft des Riegelrückstellelements 8 so bewegt, dass das Sicherungsteil 2 wieder freigegeben wird und mittels eines Sicherungsteilrückstellelements 9, beispielsweise eine Feder, gegen den Uhrzeigersinn wieder in die jeweils andere Position zurück bewegt. Das Sicherungsteilrückstellelements 9, beispielsweise eine Schenkelfeder, wird zusammen mit der Bewegung des Sicherungsteils 2 in Richtung Einrastposition gespannt. Bei geschlossener Klappe wird das Halteelement 3 im Sicherungsteil 2 in einer Profilbahn geführt. Der Querschnitt der Profilbahn ist so konzipiert, dass das Halteelement 3 in der verriegelten Position nicht entfernt werden kann. Die Freigabe des Halteelements 3 erfolgt in der entriegelten Position. Durch keilförmige Geometrien auf dem Sicherungsteil 2 kann ein Schließen der Klappe in verriegelter Position realisiert werden, d.h. die Klappe kann auch in der verriegelten Position geschlossen werden, jedoch nicht mehr geöffnet werden.

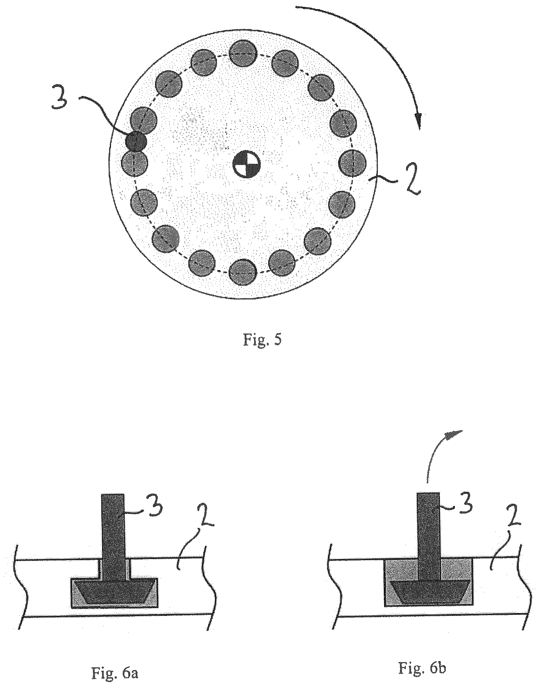

Figur 5 ist eine schematische Ansicht eines Sicherungsteils 2, das als Lochscheibe ausgestaltet ist. Das Halteelement 3 wird in einer Profilbahn auf der Lochscheibe geführt. Der Querschnitt ist so konzipiert, dass das Halteelement 3 in einer verriegelten Position, wie in Figur 6a dargestellt, nicht entfernt werden kann. Die Freigabe des Halteelements 3 und somit der Klappe erfolgt durch eine Drehung der Lochscheibe in eine entriegelte Position, wie in Figur 6b dargestellt. In der entriegelten Position kann das Halteelement 3 entfernt und wieder in die Lochscheibe zurückbewegt werden. Das Halteelement 3 kann, wie in den Figuren dargestellt, die Form eines Pilzzapfens haben, wobei der Teil mit dem größeren Durchmesser in einer verriegelten Position der Lochscheibe mit dieser so in Eingriff steht, dass das Halteelement 3 nicht entfernt werden kann.

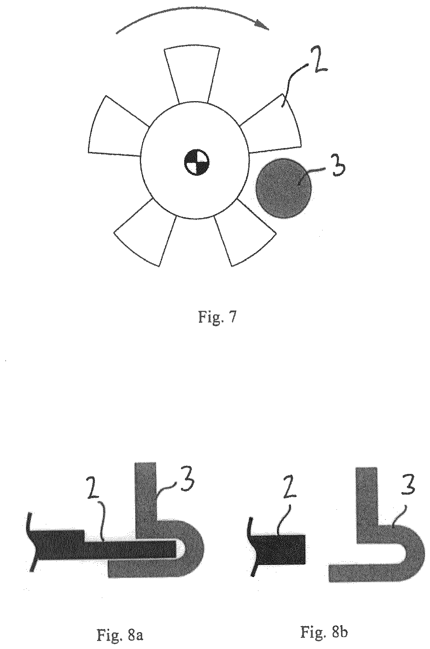

Figur 7 ist eine schematische Ansicht eines Sicherungsteils 2, das als Flügelrad ausgestaltet ist. Das Flügelrad hat Flügel, die sich radial von einem Rotationszentrum weg erstrecken. In einer verriegelten Position, wie in Figur 8a gezeigt, wird das Halteelement 3 durch einen Flügel des Flügelrads gehalten. Dreht sich das Flügelrad um eine Position weiter, wie in Figur 8b gezeigt, ist das Halteelement 3 freigegeben und kann entfernt und wieder zurückbewegt werden. Der Abstand der Flügel kann so gewählt werden, dass er etwas größer als die Breite der Flügel ist. Dadurch kann verhindert werden, dass das Halteelement 3 in einer entriegelten Position noch teilweise in Eingriff ist uns somit blockiert oder die Öffnung der Klappe erschwert. Das Halteelement 3 der Klappe kann eine U- oder Hakenform aufweisen. Ein Flügelrad oder ein Flügelradabschnitt kann auch in Verbindung mit der ersten und/oder der zweiten Ausführungsform, wie in Figuren 1 bis 4 gezeigt, verwendet werden. Auch eine Lochscheibe oder ein Lochscheibenabschnitt kann mit beiden Ausführungsformen verwendet werden. Auch die gezeigten Getriebe 4 können in beiden Ausführungsformen verwendet werden, insbesondere das Getriebe 4 gemäß Figur 2 in Verbindung mit einem Flügelrad.

### Bezugszeichenliste

- 1: Aktuator
- 2: Sicherungsteil
- 3: Halteelement
- 4: Getriebe
- 5: Rasten
- 6: Riegel
- 7: Einrastzacken
- 8: Riegelrückstellelement
- 9: Sicherungsteilrückstellelement

## Patentansprüche

1. Klappe mit einer daran angeordneten Entriegelungsvorrichtung, insbesondere ein Kraftfahrzeugtankdeckel, wobei die Klappe aufweist:
eine Gelenkvorrichtung, um die Klappe relativ zu einem Träger, insbesondere ein Kraftfahrzeug, zwischen einer geschlossenen und einer offenen Position bewegen zu können, wobei in einer geschlossenen Position eine Öffnung zumindest teilweise abgedeckt wird;
eine Entriegelungsvorrichtung mit einem Aktuator (1), wobei die Entriegelungsvorrichtung ein bewegbares Sicherungsteil (2) aufweist, das mittels des Aktuators (1) zwischen mindestens einer verriegelten Position und mindestens einer entriegelten Position bewegt werden kann,
wobei die Klappe in der entriegelten Position zwischen der geöffneten und der geschlossen Position bewegt werden kann und in der verriegelten Position das Sicherungsteil (2) mit einem Halteelement (3), das ortsfest zum Träger angeordnet ist, so in Eingriff gebracht ist, dass die Klappe nicht von der geschlossenen Position in die geöffnete Position bewegt werden kann, und
das Sicherungsteil (2) so ausgestaltet ist, dass es in einer wechselnden Richtung zwischen einer verriegelten Position und einer entriegelten Position bewegt wird, und zwar durch eine Aktuatorauslösung in eine erste Richtung und in eine verriegelte oder entriegelte Position bewegt wird und durch ein Sicherungsteilrückstellelement (9) zurück zur anderen Position bewegt wird,
**dadurch gekennzeichnet, dass**
der Aktuator (1) ein Formgedächtnismaterial aufweist, und
das Sicherungsteil (2) einen Rastmechanismus aufweist, so dass das Sicherungsteil nach der Bewegung in die erste Richtung einrastet und erst nach einer Freigabe des Rastmechanismus in die andere Position bewegt werden kann.

2. Klappe nach Anspruch 1, wobei der Aktuator (1) eine Linearbewegung ausführt, die das Sicherungsteil (2) mittels einer direkten Verbindung oder über ein Getriebe (4) antreibt.

3. Klappe nach Anspruch 2, wobei das Sicherungsteil (2) über ein Getriebe (4) angetrieben ist, und das Getriebe (4) die Linearbewegung des Aktuators (1) in eine Rotationsbewegung des Sicherungsteils (2) umwandelt.

4. Klappe nach einem der vorhergehenden Ansprüche, wobei die Freigabe des Rastmechanismus durch eine zweite Aktuatorauslösung erfolgt.

5. Klappe nach einem der vorhergehenden Ansprüche, wobei das Sicherungsteil (2) eine Lochscheibe oder ein Abschnitt einer Lochscheibe ist.

6. Klappe nach Anspruch 5, wobei das Halteelement (3) ein Pilzzapfen ist, der mit der Lochscheibe in Eingriff gebracht werden kann.

7. Klappe nach einem der Ansprüche 1 bis 4, wobei das Sicherungsteil (2) ein Flügelrad oder ein Abschnitt eines Flügelrads ist.

8. Klappe nach Anspruch 7, wobei das Halteelement (3) ein U-förmiges Element ist, in das ein Flügel des Flügelrads eingreifen kann.

9. Tankdeckel mit einer daran angeordneten Entriegelungsvorrichtung gemäß der Ansprüche 1 bis 8.

10. Handschuhfachdeckel mit einer daran angeordneten Entriegelungsvorrichtung gemäß der Ansprüche 1 bis 8.

## Claims

1. Flap having an unlocking device arranged thereon, in particular a motor vehicle tank lid, wherein the flap comprises:
a joint device in order to be able to move the flap relative to a carrier, in particular a motor vehicle, between a closed and an open position, wherein in a closed position, an opening is covered at least partially;
an unlocking device with an actuator (1), wherein the unlocking device has a movable safety part (2) which can be moved by means of the actuator (1) between at least one locked position and at least one unlocked position,
wherein the flap can be moved in the unlocked position between the opened and the closed position and in the locked position the safety part (2) is engaged with a holding element (3), which is arranged fixed to the carrier, in such a way that the flap cannot be moved from the closed position into the opened position and
the safety part (2) is configured in such a way that it is moved in an alternating direction between a locked position and an unlocked position and is moved by an actuator tripping into a first direction and into a locked or unlocked position and is moved by a safety part return element (9) back to the other position,
**characterised in that**
the actuator (1) has a shape memory material and
the safety part (2) has a latching mechanism such that the safety part latches into the first direction after the movement and can be moved into the other position only after a release of the latching mechanism.

2. Flap according to claim 1, wherein the actuator (1) performs a linear movement which drives the safety part (2) by means of a direct connection or via a gear mechanism (4).

3. Flap according to claim 2, wherein the safety part (2) is driven via a gear mechanism (4) and the gear mechanism (4) converts the linear movement of the actuator (1) into a rotational movement of the safety part (2).

4. Flap according to any one of the preceding claims, wherein the release of the latching mechanism takes place by way of a second actuator tripping.

5. Flap according to any one of the preceding claims, wherein the safety part (2) is a perforated disc or a section of a perforated disc.

6. Flap according to claim 5, wherein the holding element (3) is a mushroom pin which can be engaged with the perforated disc.

7. Flap according to any one of claims 1 to 4, wherein the safety part (2) is an fan wheel or a section of a fan wheel.

8. Flap according to claim 7, wherein the holding element (3) is a U-shaped element into which a blade of the fan wheel can engage.

9. Tank lid having an unlocking device arranged thereon according to claims 1 to 8.

10. Glove compartment lid having an unlocking device arranged thereon according to claims 1 to 8.

## Revendications

1. Trappe avec un dispositif de déverrouillage agencé dessus, en particulier trappe de réservoir de véhicule automobile, laquelle trappe ayant :
un dispositif d'articulation pour pouvoir déplacer la trappe par rapport à un support, en particulier un véhicule automobile, entre une position fermée et une position ouverte, une ouverture étant au moins partiellement couverte dans une position fermée ;
un dispositif de déverrouillage avec un actionneur (1), lequel dispositif de déverrouillage comporte une pièce de sécurité mobile (2) qui peut être déplacée au moyen de l'actionneur (1) entre au moins une position verrouillée et au moins une position déverrouillée,
dans laquelle, dans la position déverrouillée, la trappe peut être déplacée entre la position ouverte et la position fermée et dans laquelle, dans la position verrouillée, la pièce de sécurité (2) est mise en prise avec un élément de retenue (3) qui est agencé, fixe, sur le support, de telle sorte que la trappe ne peut pas être déplacée de la position fermée à la position ouverte, et
dans laquelle la pièce de sécurité (2) est conçue de telle sorte qu'elle est déplacée dans une direction en alternance entre une position verrouillée et une position déverrouillée, à savoir est déplacée dans une position verrouillée ou une position déverrouillée par un déclenchement d'actionneur dans une première direction et est redéplacée vers l'autre position par un élément de rappel de pièce de sécurité (9),
**caractérisée en ce que**
l'actionneur (1) comporte un matériau à mémoire de forme, et
la pièce de sécurité (2) comporte un mécanisme d'encliquetage de telle sorte que la pièce de sécurité est encliquetée après le déplacement dans la première direction et ne peut être déplacée dans l'autre position qu'après une libération du mécanisme d'encliquetage.

2. Trappe selon la revendication 1, dans laquelle l'actionneur (1) réalise un déplacement linéaire qui entraîne la pièce de sécurité (2) au moyen d'une liaison directe ou par l'intermédiaire d'un mécanisme (4).

3. Trappe selon la revendication 2, dans laquelle la pièce de sécurité (2) est entraînée par l'intermédiaire d'un mécanisme (4) et dans laquelle le mécanisme (4) transforme le déplacement linéaire de l'actionneur (1) en un déplacement en rotation de la pièce de sécurité (2).

4. Trappe selon l'une des revendications précédentes, dans laquelle la libération du mécanisme d'encliquetage est effectuée par un deuxième déclenchement d'actionneur.

5. Trappe selon l'une des revendications précédentes, dans laquelle la pièce de sécurité (2) est un disque perforé ou une partie d'un disque perforé.

6. Trappe selon la revendication 5, dans laquelle un élément de fixation (3) est un tenon à tête arrondie qui peut être mis en prise avec le disque perforé.

7. Trappe selon l'une des revendications 1 à 4, dans laquelle la pièce de sécurité (2) est une roue à ailettes ou une partie d'une roue à ailettes.

8. Trappe selon la revendication 7, dans laquelle l'élément de retenue (3) est un élément en forme de U dans lequel une ailette de la roue à ailettes peut pénétrer.

9. Couvercle de réservoir avec un dispositif de déverrouillage agencé dessus selon les revendications 1 à 8.

10. Couvercle de boîte à gants avec un dispositif de déverrouillage agencé dessus selon les revendications 1 à 8.
